# EUROPÄISCHE PATENTANMELDUNG

(11) **EP 3 524 383 A1**
(43) Veröffentlichungstag der Anmeldung: **14.08.2019**
(21) Anmeldenummer: 19020092.3
(22) Anmeldetag: 27.02.2018
(51) Int. Cl.: B23P 15/00, B21K 1/46, F16B 35/00

(54) **VERFAHREN ZUR HERSTELLUNG EINES BEFESTIGUNGS- ODER VERBINDUNGSMITTELS**

(30) Priorität: 01.03.2017 DE 102017104205
(62) Teilanmeldung aus: 18020080.0
(71) Anmelder: Heinrich Hofsäß GmbH & Co. KG, 75223 Niefern (DE)
(72) Erfinder: HINCKEL, Wolfgang, 75179 Pforzheim (DE); HOFSÄß, Roger, 75179 Pforzheim (DE)
(74) Vertreter: Patentanwälte Schuster, Müller & Partner mbB

(57) **Zusammenfassung**

Es wird ein Verfahren zur Herstellung eines einen Schaft, an dessen einem Ende ein Kopf (8) angeordnet ist, aufweisenden Befestigungs- oder Verbindungsmittels, insbesondere einer Schraube, einen Gewindebolzen, einem Niet, einem Nagel odgl., aus einem Rohling, vorgeschlagen, wobei zur Anformung des Kopfes (8) mittig in eine Stirnseite des Schaftes, der einen konstanten Querschnitt, wobei unter einem Querschnitt ein Schnitt senkrecht zu einer Längsachse des Befestigungs- oder Verbindungsmittels verstanden wird, aufweist, eine Vertiefung (z.B. Bohrung) eingebracht wird, um anschließend mittels eines Anformwerkzeuges die die Vertiefung aufweisende Stirnseite des Schaftes derart zu verformen, dass durch die Verformung ein Kopf (8), der einen konstanten oder einen variablen Querschnitt aufweist, gebildet wird, wobei mindestens an einer Stelle des Kopfes (8) ein Querschnitt des Kopfes (8) größer ist als der größte Querschnitt des Schaftes und an dem Rohling, der eine Mantelfläche aufweist, mittels eines Gewinderollapparates oder eines Gewindewalzprozesses an der Mantelfläche zumindest eine Gewindewendel angeformt wird, wodurch unter Vereinfachung des Herstellungsverfahrens ein Befestigungs- oder Verbindungsmittel herstellbar ist.

## Beschreibung

### Stand der Technik

Die Erfindung geht aus von einem Verfahren zur Herstellung eines einen Schaft, an dessen einem Ende ein Kopf angeordnet ist, aufweisenden Befestigungs- oder Verbindungsmittels, insbesondere eine Schraube, einem Niet, einen Nagel odgl., aus einem Rohling, nach der Gattung des Anspruchs 1.

Für die Herstellung insbesondere einer Schraube, bei der eine Ringfläche unter dem Kopf als Anschlag gegen das mit ihr zu befestigende Teil dient, wird bevorzugt ein Kaltfließpressverfahren angewandt, bei dem ein auf einer Spule aufgewickelter Draht abgehaspelt und gerade gerichtet wird, um anschließend die erforderlichen Verfahrensschritte, wie eine Anbringung eines Kopfes an den Schaft und ein Versehen des Schaftes mit einem Gewinde vorzunehmen.

Aus der Offenlegungsschrift DE 27 09 873 A1 ist ein Verfahren zur Herstellung einer Schraube bekannt, bei dem ein mit einem Gewinde versehener Schaft mit einem Schraubenkopf durch Verschweissen miteinander verbunden wird. Nachteilig ist hierbei, dass, da die Schraube aus zwei Teilen zusammengesetzt wird, die Festigkeit der Schraube als eher gering einzustufen ist.

In der Offenlegungsschrift DE 199 18 196 A1 wird eine Stellschraube für Scharniere, die zur Justierung von Scharnieren bei Möbelelementen verwendet wird, um die Position einer Tür oder Klappe relativ zu einem Korpus, beispielsweise zu einem Schrank oder einer Vitrine, verändern zu können, offenbart. Eine derartige Stellschraube weist an ihrem einen Ende ein Mitnahmeprofil für Schraubwerkzeuge auf. Das dem Mitnahmeprofil abgewandte Ende ist an einem Hals (Einstich, Verjüngung) angeordnet, so dass dieses Ende in eine an einem Scharnier vorgesehene Führung eingreifen kann. Wird nun durch einen Anwender z.B. ein Schraubendreher an dem Mitnahmeprofil angesetzt, kann die Stellschraube in die Führung hinein oder aus dieser heraus gedreht werden, wodurch sich z.B. die Position der Tür relativ zum Korpus des Möbelteils ändert. Zwar ist die Stellschraube bevorzugt einstückig in einem Kaltfließpreß- und/oder Kaltstauchverfahren hergestellt, doch ist nachteilig zu beurteilen, dass das verwendete Schraubwerkzeug einen Sichtkontakt des Anwenders zu der Stellschraube erschwert, wodurch die Stellschraube oftmals zu tief in die Führung geschraubt wird. Auch die Verfahren zur Herstellung von Befestigungs- oder Verbindungsmitteln, die in der Patentanmeldung FR 1 003 311 A, der Patentanmeldung JP H03 193237 A, der Patentanmeldung US 1 978 371 A und der Patentanmeldung FR 1 004 645 A offenbart werden, vermögen diesen Nachteil nicht zu überwinden.

In der Patentschrift DE 10 2008 038 185 B3 wird ein Verfahren zur Herstellung von Befestigungs- oder Verbindungsmitteln mit radialen Außenkonturen, insbesondere Schrauben und Gewindebolzen, beschrieben, bei dem ein als Ausgangsmaterial zugeführter Draht auf eine vorgegebene Länge abgelängt wird, um zur Anformung eines Kopfes an den Schaft, nachdem der Schaft vorgestaucht wurde, den Schraubenkopf mit einer Innensechskant-Ausnehmung zu formen, bevor in den Schaft mittels eines Gewindepresswerkzeug ein Gewinde eingepresst wird. Nachteilig ist hierbei, dass zur Einpressung des Gewindes jede Schraube einzeln dem Gewindepresswerkzeug zugeführt werden muss.

Der Erfindung liegt daher die Aufgabe zugrunde, ein die Nachteile des Standes der Technik überwindendes Verfahren zur Herstellung eines einen Schaft, an dessen einem Ende ein Kopf angeordnet ist, aufweisenden Gegenstandes, insbesondere eine Schraube (z.B. Stellschraube), einem Niet, einen Nagel odgl, bereitzustellen.

### Die Erfindung und ihre Vorteile

Das erfindungsgemäße Verfahren zur Herstellung eines einen Schaft, an dessen einem Ende ein Kopf angeordnet ist, aufweisenden Befestigungs- oder Verbindungsmittels, insbesondere eine Schraube, einem Niet, einen Nagel odgl., aus einem Rohling, mit den Merkmalen des Anspruchs 1, hat demgegenüber den Vorteil, dass zur Anformung des Kopfes mittig in eine Stirnseite des Schaftes, der einen konstanten Querschnitt, wobei unter einem Querschnitt ein Schnitt senkrecht zu einer Längsachse des Befestigungs- oder Verbindungsmittels verstanden wird, aufweist, eine Vertiefung (z.B. Bohrung) eingebracht wird, um anschließend mittels eines Anformwerkzeuges die die Vertiefung aufweisende Stirnseite des Schaftes derart zu verformen, dass durch die Verformung ein Kopf, der einen konstanten oder einen variablen Querschnitt aufweist, gebildet wird, wobei mindestens an einer Stelle des Kopfes ein Querschnitt des Kopfes größer ist als der größte Querschnitt des Schaftes und an dem Rohling, der eine Mantelfläche aufweist, mittels eines Gewinderollapparates oder eines Gewindewalzprozesses zumindest eine Gewindewendel an der Mantelfläche angeformt, wodurch unter Vereinfachung des Herstellungsverfahrens ein Befestigungs- oder Verbindungsmittel herstellbar ist. Im Falle der Herstellung einer Schraube, insbesondere einer Stellschraube, bewirkt die Anformung des Kopfes durch den im Vergleich zum Schaft größeren Durchmesser eine Stoppfunktion, wodurch die Stellschraube durch einen Anwender nicht zu tief in eine Führung geschraubt werden kann.

Nach einer vorteilhaften Ausgestaltung des erfindungsgemäßen Verfahrens weist die Vertiefung mindestens zwei Durchmesser auf, wobei der größte Durchmesser an der Stirnseite des Schaftes gegeben ist. Bevorzugt weist die Vertiefung zwei Durchmesser auf, so dass zwischen diesen ein stufenförmiger Absatz gebildet wird.

Nach einer zusätzlichen vorteilhaften Ausgestaltung des erfindungsgemäßen Verfahrens wird die Vertiefung mit mindestens einem Bohrer, einem Stufenbohrer oder einem Bohrer und einer Fräse eingebracht.

Nach einer zusätzlichen vorteilhaften Ausgestaltung des erfindungsgemäßen Verfahrens wird zur Anformung des Kopfes an der Stirnseite des Schaftes befindliches Material zumindest teilweise nach außen oder zumindest teilweise nach außen und zur Mitte hin verdrängt. Das nach außen verdrängte Material bildet, da es zumindest teilweise über den Durchmesser des Schaftes hinausragt, einen Anschlag bzw. bewirkt bei einer Stellschraube die gewünschte Stoppfunktion.

Nach einer zusätzlichen vorteilhaften Ausgestaltung des erfindungsgemäßen Verfahrens wird zur Anformung des Kopfes ein Taumelwerkzeug, insbesondere ein Taumelwerkzeug, bei dem die dem Schaft zugewandte Fläche konkav ausgestaltet ist, oder ein Hammer eingesetzt.

Nach einer zusätzlichen vorteilhaften Ausgestaltung des erfindungsgemäßen Verfahrens wird an dem Kopf ein Kopfantrieb ein- und/oder angearbeitet.

Nach einer diesbezüglichen vorteilhaften Ausgestaltung des erfindungsgemäßen Verfahrens wird als Kopfantrieb ein Kopf-Schlitz oder Kopf-Kreuzschlitz eingearbeitet.

Nach einer zusätzlichen vorteilhaften Ausgestaltung des erfindungsgemäßen Verfahrens wird der Kopfantrieb mittels einer Schlitzsäge in den Kopf eingearbeitet.

Nach einer zusätzlichen vorteilhaften Ausgestaltung des erfindungsgemäßen Verfahrens wird als Rohling ein Draht eingesetzt.

Nach einer zusätzlichen vorteilhaften Ausgestaltung des erfindungsgemäßen Verfahrens wird der Rohling zur Bearbeitung von einem Wickelkörper (z.B. Spule) abgewickelt.

Nach einer diesbezüglichen vorteilhaften Ausgestaltung des erfindungsgemäßen Verfahrens wird der Rohling mittels eines Richtrollenapparates gerade gerichtet.

Nach einer zusätzlichen vorteilhaften Ausgestaltung des erfindungsgemäßen Verfahrens erhält der Rohling einen Einstich.

Nach einer zusätzlichen vorteilhaften Ausgestaltung des erfindungsgemäßen Verfahrens wird der Rohling mittels einer Trennsäge oder eines Schneidwerkzeuges abgelängt.

Nach einer diesbezüglichen vorteilhaften Ausgestaltung des erfindungsgemäßen Verfahrens wird der Rohling vor oder nach dem Ablängen einem Schaltteller zugeführt.

Nach einer diesbezüglichen vorteilhaften Ausgestaltung des erfindungsgemäßen Verfahrens wird der Rohling durch den Schaltteller an dem bzw. den für die stirnseitige Anbringung der Vertiefung erforderlichen Werkzeug bzw. Werkzeugen positioniert.

Nach einer zusätzlichen vorteilhaften Ausgestaltung des erfindungsgemäßen Verfahrens wird der Rohling durch den Schaltteller an dem für die Anformung des Kopfes erforderlichen Anformwerkzeuges positioniert.

Nach einer zusätzlichen vorteilhaften Ausgestaltung des erfindungsgemäßen Verfahrens wird das einen Schaft und einen Kopf aufweisende Befestigungs- oder Verbindungsmittel vernickelt.

Weitere Vorteile und vorteilhafte Ausgestaltungen der Erfindung sind der nachfolgenden Beschreibung, den Ansprüchen und der Zeichnungen entnehmbar.

### Zeichnungen

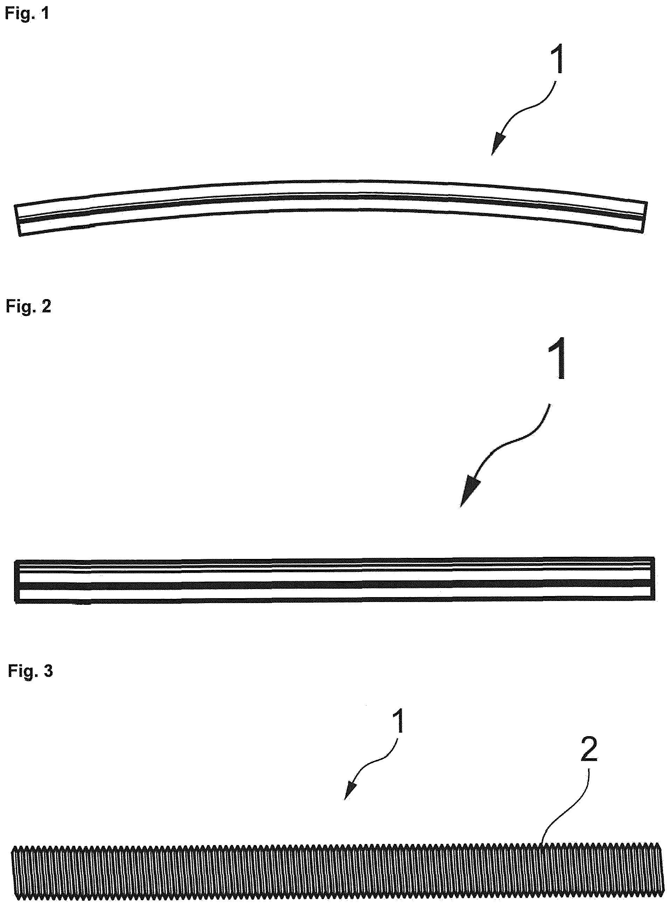

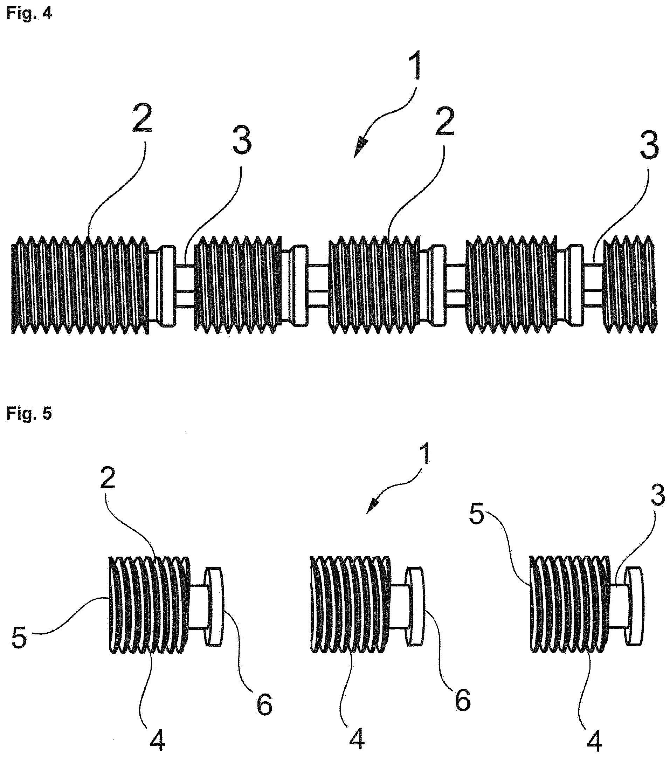

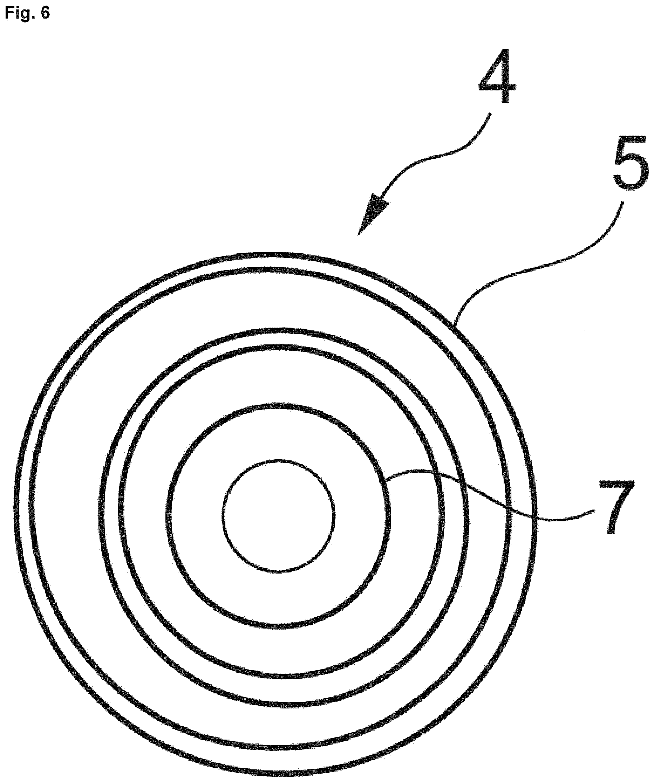

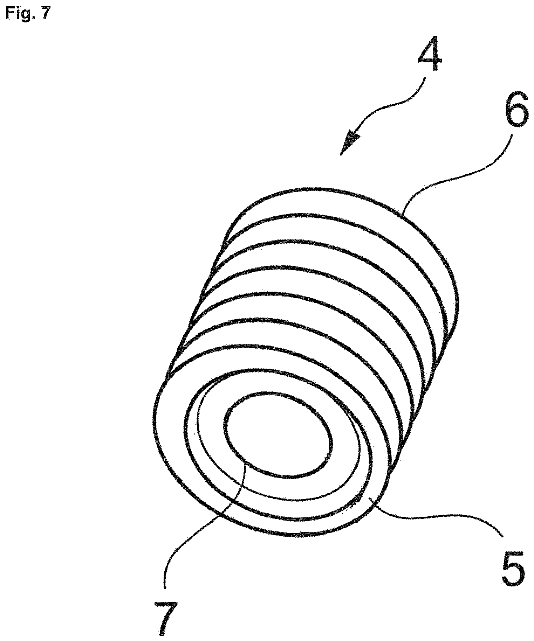

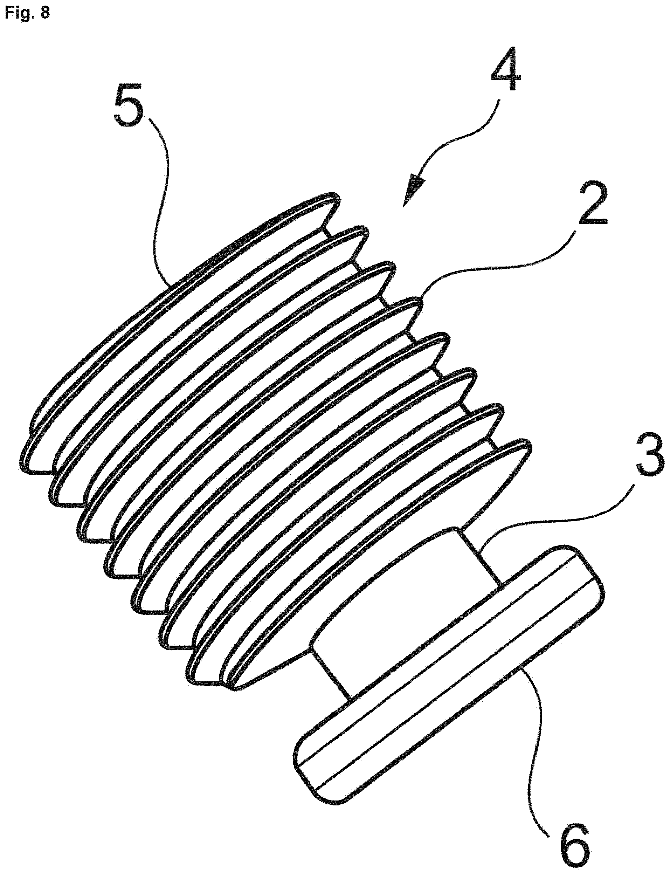

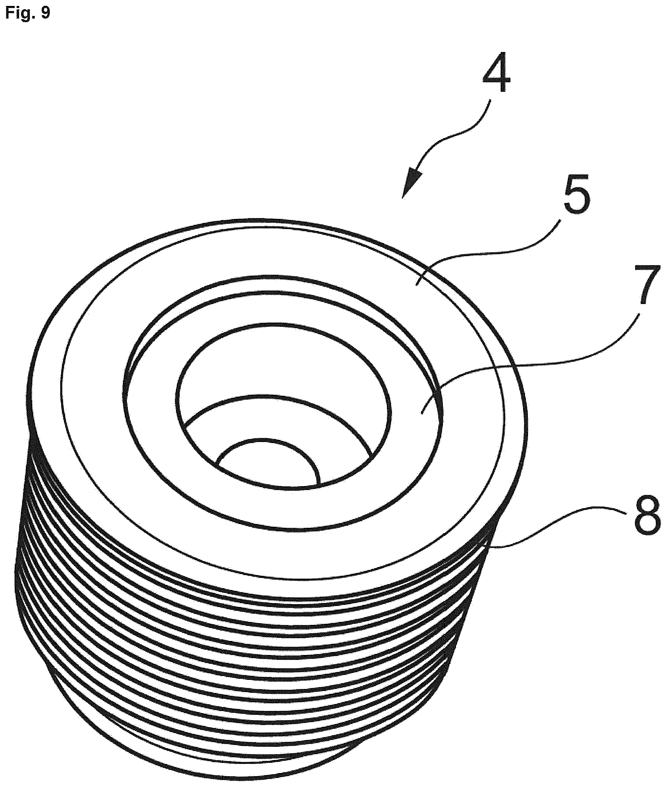

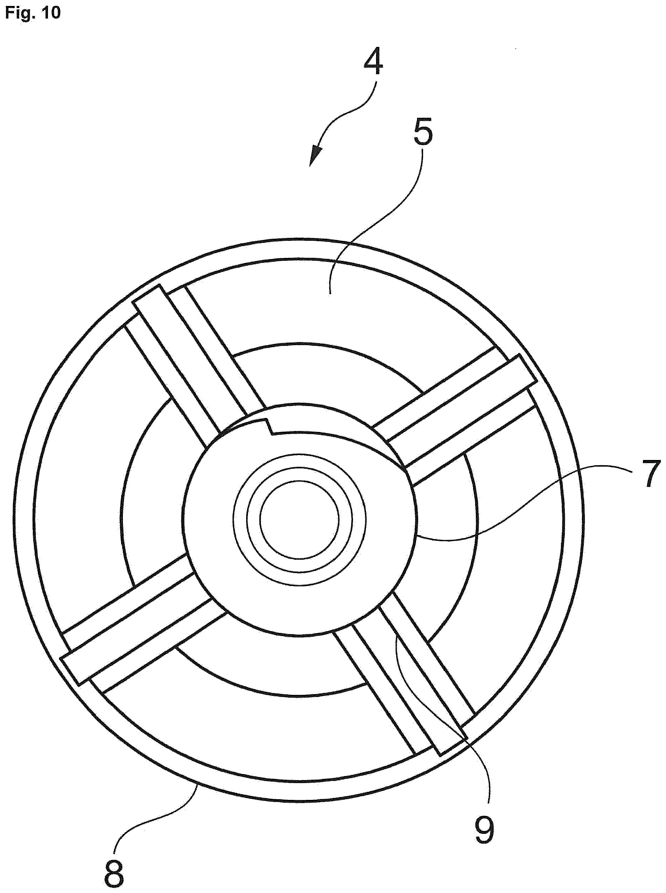

Bevorzugte Ausführungsbeispiele des erfindungsgemäßen Verfahrens sind in den Zeichnungen dargestellt und werden im Folgenden näher erläutert. Es zeigen
- Fig. 1 bis Fig. 10: schematische Darstellungen einzelner bei der Herstellung einer Schraube, insbesondere einer Verstellschraube mit Stopp-Funktion, durchführbare Verfahrensschritte.

### Beschreibung der Ausführungsbeispiele

Fig. 1 bis Fig. 10 zeigen schematische Darstellungen einzelner bei der Herstellung einer Schraube, insbesondere einer Verstellschraube mit Stopp-Funktion (Stopperschraube), durchführbare Verfahrensschritte. Aus Fig. 1 ist ersichtlich, dass ein ungerichteter Draht 1 (Rohling), der bevorzugt ein rundes Grundmaterial aufweist und beispielsweise von einer nicht dargestellten Spindel abgerollt wird, mittels eines nicht dargestellten Richtrollenapparates zu einem gerichteten Draht (Fig. 2) umgeformt wird, um auf ihm anschließend mittels eines nicht dargestellten Gewinderollapparates ein Gewinde 2 (Außengewinde), dass eine gleichbleibende Gewindesteigung oder eine unterschiedliche Gewindesteigung aufweisen kann, aufzurollen (Fig. 3). Anschließend wird in den Draht 1 eine Kontur 3 (Schraubenform) eingestochen (Fig. 4), um anschließend Teile 4 zu vereinzeln, wodurch sie jeweils eine schaftseitige Stirnseite 5 und eine kopfseitige Stirnseite 6 aufweisen (Fig. 5). Bevorzugt wird zur Ablängung auf die gewünschte Gesamtlänge eines Teils 4 durch eine nicht dargestellte Trennsäge (mit Hubbewegung) der die Konturen 3 aufweisende Draht 1 einem nicht dargestellten Schaltteller zugeführt. Die schaftseitige Stirnseite 5 eines Teils 4 wird, um es mit einer Stufenbohrung zu versehen, bevorzugt in dem nicht dargestellten Schaltteller verbleibend, durch Drehen des nicht dargestellten Schalttellers dem nächsten Bearbeitungswerkzeug (Bohrer, spezieller Formbohrer) zugeführt (Fig. 6 und Fig. 7), wodurch das in Fig. 8 dargestellte Teil 4 entsteht. Anschließend wird an der schaftseitigen Stirnseite 5 des Teils 4 ein die Stopp-Funktion bewirkender Kopf 8, der mit oder ohne Gewinde ausgestaltet sein kann, angeformt. Hierzu wird mittels eines nicht dargestellten Werkzeuges (z.B. Taumelwerkzeug, Hammer), das beispielsweise das Außenmaß der schaftseitigen Stirnseite 5 auf 7,2 mm formt, an der schaftseitigen Stirnseite 5 befindliches Material zumindest teilweise nach außen oder zumindest teilweise nach außen und zur Mitte hin verdrängt (Fig. 9) und in den Kopf 8 des Teils 4, das aufgrund der Anformung des Kopfes 8 kürzer als bei seiner Ablängung ist, mittels eines nicht dargestellten Sägeblattes ein Kreuzschlitz 9 gesägt (Fig. 10).

Alle in der Beschreibung, den nachfolgenden Ansprüchen und den Zeichnungen dargestellten Merkmale können sowohl einzeln als auch in beliebiger Kombination miteinander erfindungswesentlich sein.

### Bezugszahlenliste

- 1: Draht
- 2: Gewinde
- 3: Kontur
- 4: Teil
- 5: Schaftseitige Stirnseite
- 6: Kopfseitige Stirnseite
- 7: Stufenbohrung
- 8: Kopf
- 9: Kreuzschlitz

## Patentansprüche

1. Verfahren zur Herstellung eines einen Schaft, an dessen einem Ende ein Kopf (8) angeformt ist, aufweisenden Befestigungs- oder Verbindungsmittels, insbesondere einer Schraube, einen Gewindebolzen, einem Niet, einem Nagel odgl., aus einem Rohling, wobei zur Anformung des Kopfes (8) mittig in eine Stirnseite des Schaftes, der einen konstanten Querschnitt aufweist, eine Vertiefung eingebracht wird, um anschließend mittels eines Anformwerkzeuges die die Vertiefung aufweisende Stirnseite des Schaftes derart zu verformen, dass durch die Verformung ein Kopf (8), der einen konstanten oder einen variablen Querschnitt aufweist, gebildet wird, wobei mindestens an einer Stelle des Kopfes (8) ein Querschnitt des Kopfes (8) größer ist als der größte Querschnitt des Schaftes,
**dadurch gekennzeichnet,**
**dass** an dem Rohling, der eine Mantelfläche aufweist, mittels eines Gewinderollapparates oder eines Gewindewalzprozesses an der Mantelfläche zumindest eine Gewindewendel angeformt wird.

2. Verfahren, nach Anspruch 1,
**dadurch gekennzeichnet,**
**dass** die Vertiefung mindestens zwei Durchmesser aufweist, wobei der größte Durchmesser an der Stirnseite des Schaftes gegeben ist.

3. Verfahren, nach Anspruch 1 oder Anspruch 2,
**dadurch gekennzeichnet,**
**dass** die Vertiefung mit mindestens einem Bohrer, einem Stufenbohrer oder einem Bohrer und einer Fräse eingebracht wird.

4. Verfahren, nach einem der vorhergehenden Ansprüche,
**dadurch gekennzeichnet,**
**dass** zur Anformung des Kopfes (8) an der Stirnseite des Schaftes befindliches Material zumindest teilweise nach außen oder zumindest teilweise nach außen und zur Mitte hin verdrängt wird.

5. Verfahren, nach einem der vorhergehenden Ansprüche,
**dadurch gekennzeichnet,**
**dass** zur Anformung des Kopfes (8) ein Taumelwerkzeug, insbesondere ein Taumelwerkzeug, bei dem die dem Schaft zugewandte Fläche konkav ausgestaltet ist, oder ein Hammer eingesetzt wird.

6. Verfahren, nach einem der vorhergehenden Ansprüche,
**dadurch gekennzeichnet,**
**dass** an dem Kopf (8) ein Kopfantrieb ein- und/oder angearbeitet wird.

7. Verfahren, nach Anspruch 6,
**dadurch gekennzeichnet,**
**dass** als Kopfantrieb ein Kopf-Schlitz oder Kopf-Kreuzschlitz eingearbeitet wird.

8. Verfahren, nach Anspruch 6 oder Anspruch 7,
**dadurch gekennzeichnet,**
**dass** der Kopfantrieb mittels einer Schlitzsäge in den Kopf (8) eingearbeitet wird.

9. Verfahren, nach einem der vorhergehenden Ansprüche,
**dadurch gekennzeichnet,**
**dass** als Rohling ein Draht eingesetzt wird.

10. Verfahren, nach einem der vorhergehenden Ansprüche,
**dadurch gekennzeichnet,**
**dass** der Rohling zur Bearbeitung von einem Wickelkörper abgewickelt wird.

11. Verfahren, nach Anspruch 10,
**dadurch gekennzeichnet,**
**dass** der Rohling mittels eines Richtrollenapparates gerade gerichtet wird.

12. Verfahren, nach einem der vorhergehenden Ansprüche,
**dadurch gekennzeichnet,**
**dass** der Rohling einen Einstich erhält.

13. Verfahren, nach einem der vorhergehenden Ansprüche,
**dadurch gekennzeichnet,**
**dass** der Rohling mittels einer Trennsäge oder eines Schneidwerkzeuges abgelängt wird.

14. Verfahren, nach Anspruch 13,
**dadurch gekennzeichnet,**
**dass** der Rohling vor oder nach dem Ablängen einem Schaltteller zugeführt wird.

15. Verfahren, nach Anspruch 14,
**dadurch gekennzeichnet,**
**dass** der Rohling durch den Schaltteller an dem bzw. den für die stirnseitige Anbringung der Vertiefung erforderlichen Werkzeug bzw. Werkzeugen positioniert wird.

16. Verfahren, nach Anspruch 14 oder Anspruch 15,
**dadurch gekennzeichnet,**
**dass** der Rohling durch den Schaltteller an dem für die Anformung des Kopfes (8) erforderlichen Anformwerkzeuges positioniert wird.

17. Verfahren, nach einem der vorhergehenden Ansprüche,
**dadurch gekennzeichnet,**
**dass** das einen Schaft und einen Kopf (8) aufweisende Befestigungs- oder Verbindungsmittel vernickelt wird.
